# EUROPÄISCHE PATENTSCHRIFT

(11) **EP 1 648 607 B1**
(45) Veröffentlichungstag und Bekanntmachung des Hinweises auf die Patenterteilung: **25.04.2007**
(21) Anmeldenummer: 04741090.7
(22) Anmeldetag: 16.07.2004
(51) Int. Cl.: B01L 3/00, A01N 1/02, F25D 25/00

(54) **SUBSTRATSTAPEL, INSBESONDERE FÜR DIE KRYOKONSERVIERUNG BIOLOGISCHER PROBEN**
STACK OF SUPPORTS, IN PARTICULAR FOR CRYOPRESERVATION OF BIOLOGICAL SAMPLES
EMPILEMENT DE SUPPORTS, NOTAMMENT POUR LA CRYOCONSERVATION D'ECHANTILLONS BIOLOGIQUES

(30) Priorität: 16.07.2003 DE 10332296
(43) Veröffentlichungstag der Anmeldung: 26.04.2006
(73) Patentinhaber: Fraunhofer-Gesellschaft zur Förderung der angewandten Forschung e.V., 80686 München (DE)
(72) Erfinder: DEGEL, Christian, 66440 Blieskastel (DE); ZIMMERMANN, Heiko, 66113 Saarbrücken (DE); FUHR, Günter, 13187 Berlin (DE); TRAUTMANN, Thomas, 66440 Blieskastel (DE)
(74) Vertreter: Hertz, Oliver
(86) Internationale Anmeldenummer: PCT/EP2004/007956
(87) Internationale Veröffentlichungsnummer: WO 2005/007290

(56) Entgegenhaltungen:
- DE-A- 10 144 925
- DE-A- 19 752 085
- DE-C- 4 300 231
- US-A- 5 233 844
- US-A1- 2002 051 995

## Beschreibung

Die Erfindung betrifft ein Substrat zur Aufnahme und Lagerung einer Vielzahl von Proben und insbesondere ein Substrat für die Kryokonservierung biologischer Proben. Die Erfindung betrifft auch Verfahren zur Kryokonservierung von Proben mit einem derartigen Substrat.

Es ist bekannt, biologische Proben (insbesondere biologisches Gewebe, Gewebeteile, biologische Zellen, Zellgruppen, Zellbestandteile, Zellorganellen oder biologisch relevante Makromoleküle) dauerhaft im gefrorenen Zustand zu lagern (Kryokonservierung). Die biologischen Proben werden im gelösten oder suspendierten Zustand auf einem Probensubstrat angeordnet, das zur Kryokonservierung in eine Umgebung reduzierter Temperatur, z. B. in einen Kryotank überführt wird.

Aus der Praxis sind verschiedene Formen von Substraten für die Kryokonservierung bekannt, die auf der Grundlage von Trägersystemen in der Labortechnik, wie z. B. aus Mikrotiterplatten entwickelt wurden. Wichtige Anforderungen bei der Entwicklung der herkömmlichen Substrate für die Kryokonservierung bestanden in der Bereitstellung einer hohen Aufnahmekapazität, in der Anpassung an die Einfrier- und Lagerungsbedingungen und in der Flexibilität und Funktionalität der Substrate (Fähigkeit zur einfachen Anpassung an bestimmte Konservierungsaufgaben, Fähigkeit zur erleichterten Probenentnahme im kryokonservierten Zustand). Nachteilig an den herkömmlichen Substraten (Probenkammern) für die Kryokonservierung kann jedoch sein, dass eine kompakte Anordnung z. B. in einem Kryotank mit einer Verwechslungsgefahr verbunden ist.

Es kann bspw. zu einer unbeabsichtigten Umverteilung von Substraten in einem Kryobehälter kommen, die nur durch aufwändige Maßnahmen zur Datenerfassung korrigiert werden kann.

Eine weitere Anforderung an Aufbewahrungssysteme für die Kryokonservierung besteht darin, dass eine kostengünstige Massenproduktion möglich sein soll. Mit Blick auf dieses Kriterium wären bspw. Schubladensysteme zur geordneten Ablage von Substraten in Kryobehältern nachteilig, da sie einen komplizierten Aufbau besitzen und ihre Anpassungsfähigkeit an konkrete Konservierungsaufgaben beschränkt ist.

Die genannten Probleme treten nicht nur bei Substraten zur Probenhalterung für die Kryokonservierung, sondern allgemein bei Probenträgern für flüssige (suspendierte oder gelöste) oder partikelförmige Proben biologischen oder synthetischen Ursprungs für Bearbeitungs-, Reaktions- oder Lagerungszwecke auf.

Die Aufgabe der Erfindung ist es, ein verbessertes Substrat zur Aufnahme einer Vielzahl von Proben bereitzustellen, mit dem die Nachteile der herkömmlichen Substrate (Probenkammern) insbesondere zur Kryokonservierung überwunden werden und das insbesondere einen kompakten Aufbau besitzt, kostengünstig als Massenprodukt herstellbar ist und eine Probenablage mit verminderter Verwechslungsgefahr ermöglicht. Eine weitere Aufgabe der Erfindung ist die Bereitstellung verbesserter Verfahren zur Kryokonservierung von Proben und insbesondere zur Zuführung oder Entnahme von Proben an einem Substrat insbesondere unter Tieftemperaturbedingungen.

Diese Aufgaben werden durch Substrate und Verfahren mit den Merkmalen gemäß den Patentansprüchen 1 oder 25 gelöst.

Vorteilhafte Ausführungsformen und Anwendungen der Erfindung ergeben sich aus den abhängigen Ansprüchen.

Vorrichtungsbezogen wird die o. g. Aufgabe durch die allgemeine technische Lehre gelöst, ein Substrat zur Aufnahme einer Vielzahl von Proben bereitzustellen, das einen Stapelverbund aus einer Vielzahl von Substratplatten umfasst. Die Substratplatten sind als Teilsubstrate im Stapel durch mindestens eine Verankerungsachse lösbar verbunden. Die erfindungsgemäße Kombination einzelner Substratplatten zu einem Stapel besitzt die folgenden Vorteile. Durch die Verbindung der Substratplatten mit der Verankerungsachse ist die Reihenfolge der Substratplatten im Stapel festgelegt. Eine unbeabsichtigte Umordnung der Substratplatten ist ausgeschlossen. Des Weiteren dienen die Substrate als gegenseitige Abdeckung (Verschlussfunktion). Dadurch wird eine gegenseitige Kontamination verschiedener Proben sicher verhindert. Vorteilhaft ist ferner, dass der Substratstapel mit der Verankerungsachse, die aus einem einzigen Teil bestehen kann, sicher gegen unbeabsichtigte Manipulationen verriegelt werden kann. Das erfindungsgemäße Substrat besitzt einen vereinfachten Aufbau, der vollständig aus tieftemperaturtauglichen Materialien herstellbar und für eine kostengünstige, massenhafte Produktion geeignet ist.

Der Stapelverbund umfasst mindestens zwei Substratplatten (oder: Paletten), von denen wenigstens eine Substratplatte zur Probenaufnahme eingerichtet ist. Eine Substratplatte zur Probenaufnahme ist allgemein ein Behältnis oder Träger, in oder auf dem wenigstens eine Probe freiliegend oder abgedeckt angeordnet ist. Die geometrische Form des Behältnisses oder Trägers kann je nach den konkreten Aufgaben des Substrats verschieden gewählt sein. Beispielsweise kann eine Substratplatte eine oder mehrere topfförmige oder langgestreckte Probenkammern enthalten.

Die Substratplatten sind im Stapel mit einer bestimmten Stapelrichtung übereinander angeordnet. Die Verankerungsachse verläuft vorzugsweise parallel zu der Stapelrichtung. Wenn die Substratplatten eine ebene Form besitzen, sind entsprechend die Stapelrichtung und die Verankerungsachse senkrecht zu den Substratplattenebenen ausgerichtet. Die Verankerungsachse weist als Bauteil vorzugsweise eine im Wesentlichen starre Gestalt auf, sie ist vorzugsweise auch in einem Zustand ohne Zugspannung biegefest, eigensteif und formstabil. Es ist insbesondere für das Schwenken einzelner Platten aus dem Stapel vorzugsweise genau (ausschließlich) eine Verankerungsachse vorgesehen.

Gemäß einer bevorzugten Ausführungsform der Erfindung besitzt jede Substratplatte eine Lagerbohrung, durch die die Verankerungsachse hindurchtritt. Die Lagerbohrungen der Substratplatten und die Verankerungsachse bilden eine Lagerung für die Substratplatten, so dass vorteilhafterweise eine stabile Positionierung der Substratplatten relativ zueinander erzielt wird. Die Lagerbohrungen und die Verankerungsachse können jede passende, runde oder eckige Querschnittsform besitzen.
Ein kreisrunder Querschnitt der Lagerbohrungen wird jedoch für die formschlüssige Anordnung einer drehbaren Verankerungsachse bevorzugt.

Wenn gemäß einer weiteren bevorzugten Ausführungsform die Substratplatten eine rechteckige Form besitzen und die Lagerbohrung jeweils in einer Ecke der Substratplatten vorgesehen ist, werden die Substratplatten vorteilhafterweise im Stapelverbund in Bezug auf mindestens zwei Plattenränder fluchtend übereinander angeordnet. Wenn des Weiteren alle Substratplatten die gleiche Grundfläche besitzen, wird vorteilhafterweise ein gerader, kompakter Substratplattenstapel mit allseits ausgerichteten Plattenrändern gebildet.

Vorteilhafterweise kann mit dem erfindungsgemäßen Substrat eine Modulkonstruktion realisiert werden, in der eine Vielzahl von Substratplattenstapeln wiederum stapel- und/oder reihenweise miteinander verbunden werden, wobei der Verbund wiederum durch eine oder mehrere Verankerungsachsen verriegelt werden kann.

Gemäß einer besonders vorteilhaften Variante der Erfindung kann vorgesehen sein, dass die Lagerbohrung mindestens einer der Substratplatten im Stapelverbund am Rand der Substratplatte eine Einführungsöffnung aufweist, durch die sich die Lagerbohrung zum Umfang der Substratplatte hin öffnet. Die Bereitstellung der Einführungsöffnung bedeutet, dass die Lagerbohrung eine im Rand der jeweiligen Substratplatte geformte Ausnehmung darstellt. Dies ermöglicht ein laterales Ansetzen oder Abnehmen der Substratplatte von der Verankerungsplatte, ohne dass die axial auf der Verankerungsachse aufgereihten Substratplatten sämtlich abgenommen werden müssen. Die Einführungsöffnung der Lagerbohrung erhöht damit die Flexibilität bei der Anwendung des erfindungsgemäßen Substrats, in dem auf die jeweiligen Substratplatten frei zugegriffen werden kann. Besonders bevorzugt ist es, wenn alle Substratplatten jeweils mit der Einführungsöffnung an der Lagerbohrung ausgestattet sind.

Weitere Vorteile können sich ergeben, wenn die Einführungsöffnung ein Einsetzen oder Abnehmen der jeweiligen Substratplatte nur bei einer vorgegebenen geometrischen Ausrichtung der Substratplatte relativ zur Verankerungsachse ermöglicht. Hierzu sind die folgenden Maßnahmen vorgesehen. Die Einführungsöffnung bildet wenigstens über einen Teil der Dicke der Substratplatte eine Kragenöffnung mit einer Breite, die geringer als die Querschnittsdimension, insbesondere geringer als der Durchmesser der Lagerbohrung ist. Die Verankerungsachse besitzt mindestens in Teilabschnitten eine Dicke derart, dass sie durch die Kragenöffnung geschoben werden kann. Es können an der Verankerungsachse Teilabschnitte verminderter Dicke vorgesehen sein, axial entsprechend der Position der Kragenöffnung in Stapelrichtung und/oder radial als eingeschnittene Schlüsselflächen gebildet sind. Wenn die Substratplatte und die Verankerungsachse relativ zueinander so ausgerichtet werden, dass die Kragenöffnung und der Teilabschnitt mit verminderter Dicke zueinander ausgerichtet sind, kann die Substratplatte in einer Richtung senkrecht zur Verankerungsachse von dieser abgezogen werden.

Wenn gemäß einer weiteren Ausführungsform der Erfindung die Verankerungsachse an ihrem oberen Ende eine Auskragung aufweist, kann ein Anschlag zur Fixierung der Substratplatten im Stapelverbund gebildet werden. Die Auskragung besitzt vorzugsweise einen Durchmesser, der größer als der Durchmesser der Lagerbohrung in den Substratplatten ist.

Gemäß eine weiteren Variante ist die Verankerungsachse in den Lagerbohrungen drehbar angeordnet. Dies ermöglicht vorteilhafterweise erstens eine passende Ausrichtung der Verankerungsachse relativ zu den Kragenöffnungen im Stapelverbund, zweitens eine Verschwenkbarkeit einzelner Substratplatten (siehe unten) und drittens eine Fixierung der Verankerungsachse durch Festschrauben an einer Basisplatte.

Gemäß einer weiteren vorteilhaften Abwandlung der Erfindung können im Stapel der Substratplatten weitere Komponenten enthalten sein, die andere Funktionen als die Probenaufnahme erfüllen. Beispielsweise kann mindestens eine Datenspeichereinrichtung, eine Basisplatte und/oder eine Abdeckplatte vorgesehen sein, die jeweils vorzugsweise die gleiche äußere Form wie die Substratplatten besitzen. Vorteilhafterweise kann in der Basisplatte und/oder der Abdeckplatte ein Datenspeicher integriert sein, in dem elektronisch oder optisch Informationen gespeichert werden, die das Substrat und/oder die gespeicherten Proben charakterisieren.

Wenn gemäß einer bevorzugten Ausführungsform der Erfindung die Verankerungsachse mit einer untersten Substratplatte oder der Basisplatte versenkbar, z. B. durch eine Schraubverbindung verbunden ist, kann der Substratplattenverbund vorteilhafterweise zwischen der Auskragung am oberen Ende der Verankerungsachse und entsprechend der untersten Substratplatte oder der Basisplatte eingeklemmt werden. Der Zustand, in dem alle Substratplatten im Stapel gegenseitig fixiert sind, wird auch als Fixierposition bezeichnet.

Besondere Vorteile für den Zugriff auf einzelne Substratplatten oder einzelne Proben auf den Substratplatten ergeben sich, wenn die Substratplatten aus dem Stapel um die Verankerungsachse verschwenkbar sind. Alternativ oder zusätzlich kann auch eine Verschiebbarkeit einzelner Substratplatten senkrecht zur Ausrichtung der Verankerungsachse vorgesehen sein, wobei in diesem Fall die Substratplatte aus dem Verbund mit den übrigen Substratplatten und der Verankerungsachse lösbar ist. Hierzu ist vorzugsweise vorgesehen, dass die Verankerungsachse durch eine Verdrehung von der abgesenkten Fixierposition in eine Drehposition, in der die Substratplatten entsprechend einem Spielraum in Stapelrichtung beweglich und um die Verankerungsachse verschwenkbar sind, und/oder in eine Freigabeposition überführt werden kann, in der mindestens eine Substratplatte vom Stapel getrennt werden kann.

Die Stabilität des Verbundes der Substratplatten kann erhöht werden, wenn gemäß einer weiteren Ausführungsform der Erfindung Eingriffsmittel vorgesehen sind, die eine laterale Verschiebung der Substratplatten relativ zueinander, insbesondere mindestens in einer Richtung senkrecht zur Stapelrichtung verhindern. Beispielsweise können auf ebenen Seitenflächen der Substratplatten Profilierungen vorgesehen sein, die im Substratverbund ineinander greifen. Die Profilierungen bestehen bspw. aus noppenförmigen Vorsprüngen auf einer Plattenseite und komplementären Ausnehmungen auf der entgegengesetzten, angrenzenden Plattenseite. Vorteilhafterweise kann der gegenseitige Eingriff derartiger Profilierungen durch eine Lockerung der Verankerungsachse freigegeben werden.

Gemäß einer abgewandelten Variante umfassen die Eingriffsmittel eine formschlüssige Schiebeführung. Die Schiebeführung umfasst zum Beispiel mindestens einen Steg auf einer Seitenfläche einer Substratplatte, der mit einer Nut auf einer Seitenfläche einer angrenzenden Substratplatte zusammenwirkt. Anstelle der ineinander greifenden Stege und Nuten an den Rändern der im Stapel benachbarten Seitenflächen können andere Schiebeführungen, wie zum Beispiel Kombinationen aus Zylinderstiften mit passenden Bohrungen oder Schwalbenschwanzführungen vorgesehen sein. Mit den Schiebeführungen können die Substratplatten wie Schubladen zusammengeschoben und voneinander getrennt werden.

Bei der Realisierung der Erfindung werden zwei grundsätzliche Ausführungsformen unterschieden. Im ersten Fall, in dem das Substrat auch als Drehstapel-Substrat bezeichnet ist, sind die Substratplatten relativ zueinander verschwenkbar und ggf. auch verschiebbar. Beim Drehstapel-Substrat ist die Verankerungsachse ein einstückiger Stab oder Stift, der sich über die gesamte Höhe des Stapels aus Substratplatten (und aus ggf. vorgesehenen zusätzlichen, plattenförmigen Komponenten) erstreckt. Vorteilhafterweise besitzt der Stab entlang seiner Länge Schnittflächen (Schlüsselflächen), die für eine bestimmte Ausrichtung relativ zu den Kragenöffnungen der Lagerbohrungen ein Einsetzen oder Abziehen der jeweiligen Substratplatte ermöglichen. Vorteilhafterweise bildet die Verankerungsachse in diesem Fall sowohl den Anschlag für eine gemeinsame Ausrichtung der Substratplatten als auch eine Spanneinrichtung für den Substratplattenstapel.

Im zweiten Fall, in dem das Substrat auch als Schiebestapel-Substrat bezeichnet wird, sind die Substratplatten relativ zueinander ausschließlich verschiebbar. Beim Schiebestapel-Substrat umfasst die Verankerungsachse vorzugsweise eine Vielzahl von Achsensegmenten entsprechend der Anzahl von Substratplatten (oder zusätzlichen, plattenförmigen Komponenten) im Substratstapel. Die Bildung der Verankerungsachse aus einer Vielzahl von Achsensegmenten besitzt den folgenden besonderen Vorteil. Mit der Zahl der Substratplatten (oder zusätzlichen Komponenten im Stapel), die jeweils mit einem Achsensegment ausgestattet sind, ist automatisch die richtige Länge der Verankerungsachse vorgegeben.

Jedes Achsensegment besitzt einen zylinderförmigen Körper mit einer Höhe, die im wesentlichen der Dicke der Substratplatten entspricht und einem Durchmesser, der dem Durchmesser der Lagerbohrungen entspricht. An den Ober- und Unterseiten der Achsensegmente sind zueinander komplementäre Vorsprünge und Ausnehmungen vorgesehen, die im zusammengesetzten Stapel von Substratplatten ineinander greifen. Je nach der Ausrichtung der z. B. schlitzförmigen Ausnehmungen können einzelne Substratplatten aus dem Verbund des Stapels gezogen oder im Stapel blockiert werden.

Weitere Vorteile der Erfindung in Bezug auf die Probenhandhabung können sich ergeben, wenn die Substratplatten jeweils eine Kompartimentanordnung mit einer Vielzahl von topfförmigen Probenreservoiren aufweisen. Die geometrische Anordnung der Probenreservoire kann an die geometrische Anordnung an Mikro- oder Nanotiterplatten angepasst werden, wie sie in der Labortechnik üblich sind. Des Weiteren können die Substratplatten an sich jeweils mit einem elektronischen oder optischen Datenspeicher ausgestattet sein, der zur Speicherung von Informationen über die in der jeweiligen Substratplatte aufgenommenen Proben eingerichtet ist.

Besondere Vorteile für die Anwendung der Erfindung der Kryokonservierung ergeben sich, wenn die Substrate vollständig aus Kunststoff, z. B. TPX, PE, PTFE, PU o. dgl. bestehen. In diesem Fall können die Teile der Sustrate kostengünstig mit einem Spritzgussverfahren hergestellt und anschließend zusammengesetzt werden. Vorteilhafterweise kann der Stapelverbund auch miniaturisiert werden. Beispielsweise besitzen die Substratplatten Seitenlängen, die geringer als 10 cm, vorzugsweise kleiner als 6 cm sind.

Ein wichtiger und bei Substraten für die Kryokonservierung bisher unerreichter Vorteil der Erfindung besteht darin, dass das erfindungsgemäße Substrat aus mehreren Komponenten (insbesondere Verankerungsachse, Substratplatten) aus gleichen oder verschiedenen Kunststoffen herstellbar ist, die in allen Betriebszuständen eine ausreichende Stabilität gewährleisten und relativ zueinander beweglich sind. Es hat sich überraschenderweise herausgestellt, dass die verwendeten Kunststoffe bei Raumtemperatur zwar relativ weich und verformbar, aber dennoch ausreichend stabil sind. Bei den tiefen Konservierungstemperaturen hingegen sind die Kunststoffe hart und unelastisch, wobei sie bei angepassten thermischen Ausdehnungskoeffizienten ihre relative Beweglichkeit bewahren.

Verfahrensbezogen beruht die Erfindung auf der allgemeinen technischen Lehre, Proben zur Kryokonservierung in einem erfindungsgemäßen Substrat mit einem Plattenstapel abzulegen und im Stapelverbund einzufrieren. Dabei kann die Bildung des Stapels vor oder nach der Ablage der Proben erfolgen. Die Beschickung des Substratplatten nach Bildung des Stapels kann den Vorteil besitzen, dass unbeabsichtigte Vertauschungen von Substratplatten vermieden werden. Die Beschickung des Substratplatten vor Bildung des Stapels kann Vorteile in Bezug auf die Handhabung der Substratplatten zum Beispiel in einem Labor besitzen. Gemäß einer vorteilhaften Variante der Erfindung werden einzelne Substratplatten im gefrorenen oder aufgetauten Zustand aus dem Stapelverbund geschwenkt und/oder geschoben, so dass einzelne Proben gezielt aus dem erfindungsgemäßen Substrat entnommen werden können.

Weitere Einzelheiten und Vorteile der Erfindung werden aus der folgenden Beschreibung bevorzugter Ausführungsformen ersichtlich. Es zeigen:
- Figuren 1 bis 3:: Perspektivansichten eines Drehstapel-Substrats gemäß der Erfindung;
- Figuren 4 und 5:: Teilansichten von Substratplatten eines Drehstapel-Substrats von oben und von unten;
- Figur 6:: eine Perspektivansicht einer Verankerungsachse eines Drehstapel-Substrats;
- Figuren 7 und 8:: Illustrationen eines Basisteils eines Drehstapel-Substrats;
- Figur 9:: eine Perspektivansicht eines Schiebestapel-Substrats gemäß der Erfindung;
- Figur 10:: eine vergrößerte Darstellung eines Achsensegments;
- Figur 11:: eine Teilansicht einer Substratplatte in einem Schiebestapel-Substrat; und
- Figur 12:: ein Basisteil eines Schiebestapel-Substrats.

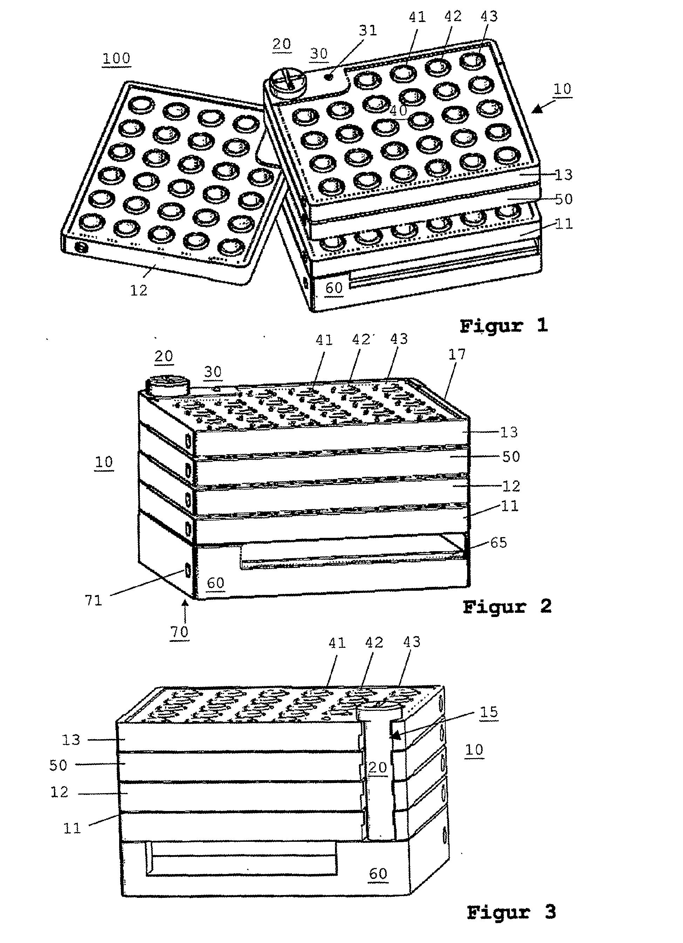

Die in den Figuren 1 bis 3 gezeigte bevorzugte Ausführungsform eines erfindungsgemäßen Drehstapel-Substrats 100 umfasst einen Stapel 10 aus Substratplatten 11, 12, 13, die mit einer Verankerungsachse 20 miteinander verbunden und auf einem Basisteil 60 angeordnet sind. Es kann vorgesehen sein, dass wenigstens eine Platte im Stapel 10 eine elektronische oder optische Datenspeichereinrichtung 50 (z. B. FLASH-Speicher) umfasst.

Die Substratplatten 11, 12, 13 sind jeweils ebene, plattenförmige Bauteile mit einer rechteckigen Grundform, auf deren oberen Seite die Kompartimentanordnung 40 mit einer Vielzahl von Probenreservoiren 41, 42, 43 gebildet ist. Die Probenreservoire 41, 42, 43 sind jeweils topfförmige Vertiefungen mit einem umlaufenden, kreisförmigen Rand. Die obere Seite der Substratplatten (z. B. 13 in Figur 2) weist einen umlaufenden Rand 17 auf, der sich an mindestens einer Seite zur Bereitstellung der Eingriffsmittel 30 (siehe unten) erweitert und der über die Plattenebene höher aufragt als die Ränder der Probenreservoire 41, 42, 43. Aus Schutzgründen kann über die obere Seite der Substratplatten eine Schutzfolie gespannt sein, die auf dem Rand 17 aufliegt.

Die Substratplatten 11, 12, 13 sind aus Kunststoff oder ggf. einem Verbundmaterial aus einem Kunststoff hergestellt, in den ein Metall (zum Beispiel Aluminium) eingebettet ist. In mindestens eine der Substratplatten kann ein Speicher, wie zum Beispiel ein magnetischer, optischer oder elektronischer Speicher integriert (eingelegt, eingegossen oder eingespritzt) sein.

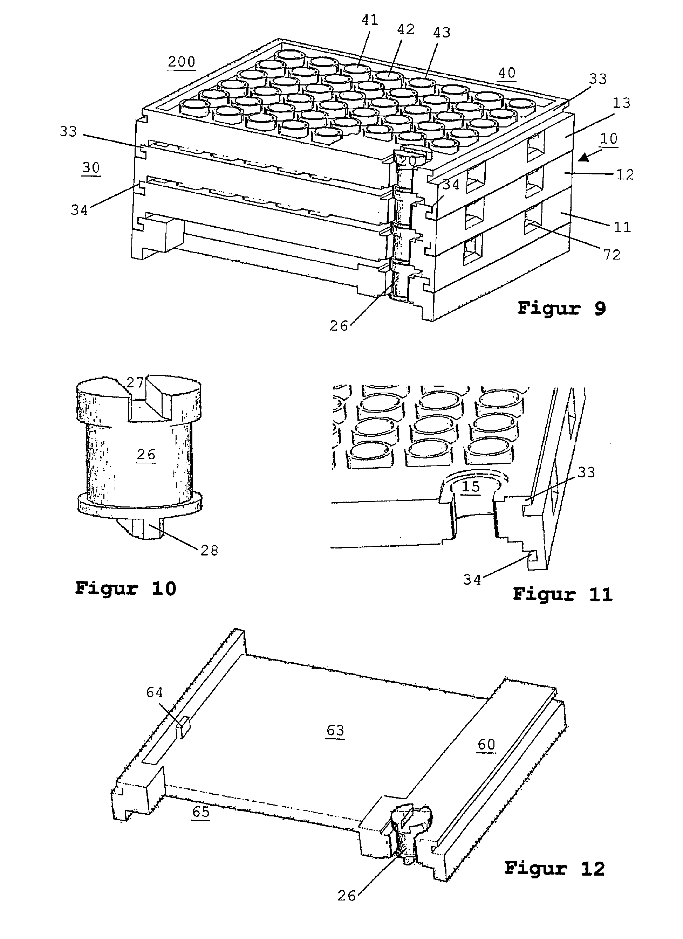

Die Platten im Stapel 10 weisen an mindestens einer Seite Manipulationsöffnungen 70 (zum Beispiel 71 in Figur 2 oder 72 in Figur 9) auf. Die Manipulationsöffnungen 70 dienen dem Eingriff von Manipulationsgeräten, Werkzeugen oder anderen Hilfsgeräten, mit denen insbesondere der Transport des gesamten Substrats oder von einzelnen Platten durchgeführt wird.

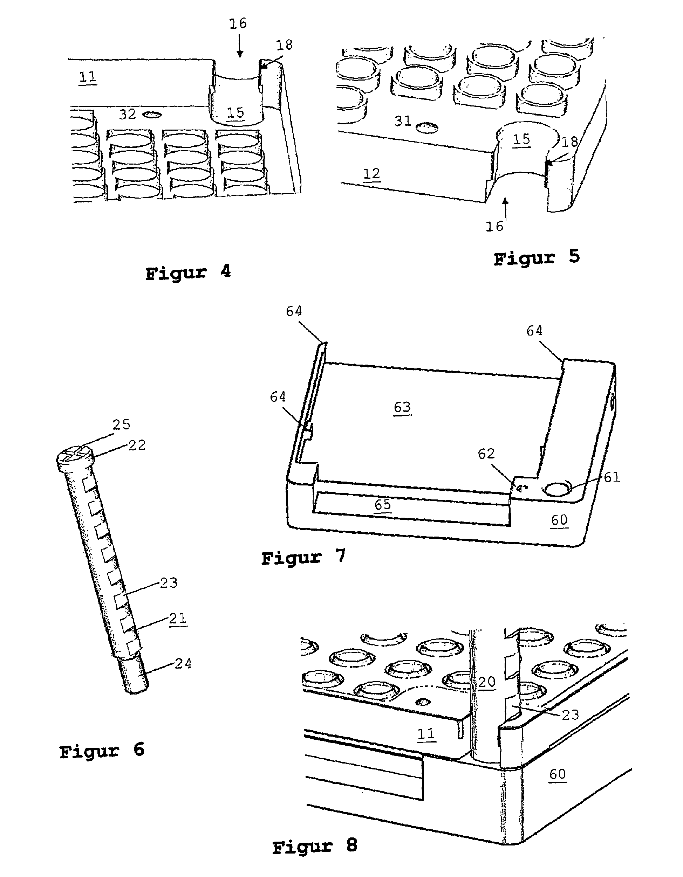

Die vergrößerte Teilansichten der Substratplatten 11, 12 in den Figuren 4 und 5 zeigen in einer Ecke der Substratplatte jeweils die Lagerbohrung 15, die sich über die Einführöffnung 16 zum Umfang der Substratplatten 11, 12 hin öffnet. Die Einführöffnung 16 besitzt eine sich etwa über die Hälfte der Dicke der Substratplatte 11 erstreckende Kragenöffnung 18, an der die Breite der durch die Einführöffnung 16 gebildeten Lücke geringer als der Durchmesser der Lagerbohrung 15 ist. Der Kragen (Rand der Kragenöffnung 18) bildet bei passender Ausrichtung der Verankerungsachse relativ zur Substratplatte ein Rückhaltelement (siehe unten).

Auf der unteren Seite der Substratplatte 11 (Figur 4) ist neben der Lagerbohrung 15 als Profilierung ein noppenförmiger Vorsprung 32 vorgesehen, der zusammen mit einer Profilierung, wie zum Beispiel der Ausnehmung 31 auf der angrenzenden oberen Seite der benachbarten Substratplatte 12 (Figur 5) die Eingriffsmittel 30 des Drehstapel-Substrats 100 bildet.

Die Verankerungsachse 20 umfasst gemäß Figur 6 einen durchgehenden Stab 21 mit einem bestimmten Außendurchmesser entsprechend dem Durchmesser der Lagerbohrungen 15 in den Substratplatten und einer am oberen Ende vorgesehenen Auskragung 22 mit einem größeren Durchmesser. Entlang der Länge des Stabes 21 sind Schnitt- oder Schlüsselflächen 23 vorgesehen, an denen die Dicke des Stabes 21 auf die Breite der Kragenöffnung 18 der Einführungsöffnung 16 vermindert ist. Die Schlüsselflächen 23 besitzen eine axiale Länge, die größer oder gleich der Länge der Kragenöffnungen 18 (in Stapelrichtung) sind, und einen axialen Abstand, der im wesentlichen dem Abstand der Kragenöffnungen 18 der Substratplatten in Stapelrichtung entspricht.

Am unteren Ende des Stabes 21 ist ein Gewinde 24 vorgesehen. Das Gewinde 24 kann über die gesamte Länge der Verankerungsachse 20 verlaufen, so dass diese wie eine Schraube aufgebaut ist. Diese Gestaltung ermöglicht einen einfachen Zuschnitt der gewünschten Länge einer Verankerungsachse. Am oberen Ende des Stabes 21 ist in der Auskragung 22 ein Schlitz 25 vorgesehen. Die Verankerungsachse 20 besteht aus Kunststoff oder ggf. einem Verbundmaterial aus Kunststoff, in den ein Metallkern (zum Beispiel aus Aluminium) eingebettet ist.

Die in Figur 7 gezeigte Basisplatte 60 bildet einen untersten Träger für den Stapel 10 der Substratplatten 11, 12, 13. Die Basisplatte 60 besitzt auf ihrer oberen Seite eine Gewindebohrung 61, die entsprechend der Position der Lagerbohrungen 15 ausgerichtet und zur Aufnahme des Gewindes 24 der Verankerungsachse 20 eingerichtet ist. Des Weiteren ist analog zur Ausnehmung 31 eine Ausnehmung 62 auf der oberen Seite der Basisplatte 60 vorgesehen.

Die Basisplatte 60 besitzt eine Ausnehmung 63 zur Aufnahme eines magnetischen, elektronischen oder optischen Datenspeichers (nicht dargestellt). Der Datenspeicher wird in die Ausnehmung 63 eingelegt und durch Vorsprünge 64 an den Rändern der Ausnehmung 63 fixiert. Alternativ kann ein Eingießen oder Einspritzen des Datenspeichers vorgesehen sein. Parallel zur Plattenebene besitzt die Ausnehmung 63 mindestens eine seitliche Öffnung, durch die einerseits auch bei zusammengesetztem Stapel der Datenspeicher einschiebbar ist und andererseits ein elektrischer Anschluss für den Datenspeicher durchführbar ist. So verweist das Bezugszeichen 65 auf eine Schnittstellenöffnung (siehe auch Figur 12). Wird der Datenspeicher beispielsweise durch einen Compact-FLASH-Speicher gebildet, kann durch die Schnittstellenöffnung 65 ein Stecker mit Kontaktstiften zum Anschluss an den Compact-FLASH-Speicher eingeführt und ggf. seitlich an der Basisplatte zumindest zeitweilig fixiert (z. B. mit einer Clips-Verbindung) werden. Über die Schnittstelle kann der Datenspeicher mit einer externen Steuereinrichtung verbunden werden.

Die am Beispiel der Basisplatte 60 beschriebene Anbringung des Datenspeichers kann auch an mindestens einer der Substratplatten oder der Abdeckplatte vorgesehen sein.

Figur 8 illustriert den ersten Schritt beim Aufbau eines erfindungsgemäßen Drehstapel-Substrats 100. Zunächst wird die Verankerungsachse 20 locker in das Basisteil 60 eingeschraubt, so dass die Schlüsselflächen 23 senkrecht zur Einführungsöffnung 16 stehen. In diesem angehobenen Zustand, der auch als Freigabeposition bezeichnet wird, befinden sich die Schlüsselflächen 23 entlang der Länge der Verankerungsachse jeweils in einer Höhe über der Basisplatte, dass die Kragenöffnungen (18) der Substratplatten im Stapel jeweils mit den Schlüsselflächen 23 ausgerichtet sind. In der Freigabeposition kann die Verankerungsachse durch die Einführungsöffnungen 16 in die Lagerbohrung eingeführt oder aus dieser heraus geschoben werden. In der Freigabeposition wird die unterste Substratplatte 11, die ggf. bereits mit Proben beschickt ist, auf die Basisplatte 60 geschoben. Da die unterste Schlüsselfläche 23 passend ausgerichtet ist, kann die Substratplatte 11 vorgeschoben werden, bis die Verankerungsachse 20 durch die Lagerbohrung 15 verläuft. Anschließend werden weitere Substratplatten entsprechend der Länge der verwendeten Verankerungsachse 20 aufgeschoben.

Die Verankerungsachse 20 befindet sich nach Vervollständigung des Stapels 10 zunächst noch in dem angehobenen Zustand der Freigabeposition. Durch die Verdrehung der Verankerungsachse z. B. mit einem Schraubenzieher, der in den Schlitz 25 der Auskragung 22 (s. Figur 6) eingreift, wird die Verankerungsachse 20 abgesenkt. Wenn die Verankerungsachse 20 in die Basisplatte 60 eingeschraubt wird, geht die Ausrichtung der Schlüsselflächen 23 mit den Kragenöffnungen 18 entlang der Länge der Verankerungsachse 20 verloren. Die Substratplatten 11, 12, 13 können nicht mehr vom Stapel 10 getrennt werden. Beim Einschrauben wird zunächst ein Zustand erreicht, in dem die Substratplatten 11, 12, 13 zwischen der Auskragung 22 der Verankerungsachse 21 und der Basisplatte 60 in Stapelrichtung noch einen Spielraum besitzen und geringfügig beweglich sind. Dieser Zustand wird auch als Drehposition der Verankerungsachse 20 bezeichnet. In der Drehposition ist der Spielraum der Substratplatten 11, 12, 13 größer als die Höhe der Profilierungen 31, 32, so dass die Substratplatten 11, 12, 13 aus dem Stapel um die Verankerungsachse 20 herausgeschwenkt werden können.

Zur Verriegelung des Stapelverbundes wird die Verankerungsachse 20 fest in die Basisplatte 60 eingeschraubt. Dieser Zustand wird auch als Fixierposition der Verankerungsachse 20 bezeichnet. In der Fixierposition werden die Substratplatten zusammengedrückt, so dass die Eingriffsmittel 31, 32 ineinander greifen und eine weitere Verschiebung oder Verschwenkung der Substratplatten blockieren.

In der Fixierposition kann das Einfrieren und Lagern des Substrats 100 zum Beispiel bei der Temperatur des flüssigen Stickstoffs oder im Dampf des flüssigen Stickstoffs (Normaldruck) erfolgen. Wenn einzelne Proben, wie z. B. aus der Substratplatte 12 gemäß Figur 1 entnommen werden sollen, kann die Verankerungsachse 20 durch Lockerung der Verschraubung an der Basisplatte 60 in die Drehposition überführt werden. In diesem Zustand werden die Eingriffsmittel 31, 32 freigegeben, so dass die Substratplatte 12 seitlich um die Verankerungsachse 20 nach außen verschwenkbar ist (Fig. 1). Die Verdrehung der Verankerungsachse 20 und/oder der Substratplatte 12 können so gewählt werden, dass die Schlüsselflächen 23 mit den Einführungsöffnungen 16 passend zusammenwirken, so dass die Substratplatte 12 vom Stapel 10 getrennt werden kann. Im Drehstapel-Substrat 100 sind bspw. 1 bis 20 Substratplatten übereinander angeordnet. Je nach der gewünschten Plattenzahl wird eine Verankerungsachse 20 mit geeigneter Länge verwendet.

In Figur 8 wird die Verankerungsachse zu Illustrationszwecken in der Fixierposition gezeigt, obwohl der Stapel noch nicht vervollständigt ist.

Es stellt einen besonderen Vorteil der Erfindung dar, dass die Verankerungsachse zwischen den Freigabe-, Dreh- und Fixierpositionen allein durch eine Verdrehung, zum Beispiel durch das Einschrauben in die Basisplatte verstellt werden kann. Die Anhebung beim Schrauben wird durch die Steigung des Gewindes 24 bestimmt. Damit kann vorteilhafterweise durch die Zahl der Umdrehungen der Verankerungsachse die Überführung zwischen den verschiedenen Positionen festgelegt werden.

Allgemein ist an einem Substratstapel vorzugsweise mindestens ein Informationsträger vorgesehen, der durch die o. g. Datenspeicher und/oder durch zusätzliche Speichermedien, wie zum Beispiel einen Barcode gebildet wird.

Eine bevorzugte Ausführungsform eines Schiebestapel-Substrats 200 ist in den Figuren 9 bis 12 illustriert. Beim Schiebestapel-Substrat 200 sind die Eingriffsmittel 30 als formschlüssige Schiebeführung zum Beispiel aus Stegen 33 und Nuten 34 geformt, die als gerade Führungsschienen zueinander komplementär an den Rändern der Ober- und Unterseiten der Substratplatten gebildet sind. Im Stapel hintergreifen Stege 33 einer Substratplatte die Nuten 34 der benachbarten Substratplatte, so dass der Stapel durch aufeinanderfolgendes Aufschieben der Substratplatten gebildet wird. Auch bei dieser Variante kann eine einstückige Verankerungsachse 20 mit den Schlüsselflächen 23 vorgesehen sein, um nach Vervollständigung des Stapels 10 eine weitere Verschiebung der Substratplatten zu unterbinden.

Bevorzugt wird jedoch bei dem Schiebestapel-Substrat eine aus Achsensegmenten 26 gebildete Verankerungsachse 20 verwendet. Diese besitzt den Vorteil, dass die Länge der Verankerungsachse 20 einfach durch die Zahl der benutzten Achsensegmente 26 passend zur Zahl der Substratplatten eingestellt wird.

Jedes Achsensegment 26 umfasst gemäß Figur 10 einen zylindrischen Körper, an dessen Ober- und Unterseiten zueinander komplementäre, schlitzförmige Ausnehmungen 27 und Vorsprünge 28 gebildet sind. Im zusammengesetzten Schiebestapel-Substrat 200 greift ein Vorsprung 28 jeweils in die Ausnehmung 27 des darunterliegenden Achsensegments 26. Wenn die Ausrichtung der schlitzförmigen Ausnehmungen und Vorsprünge 27, 28 parallel zur Ausrichtung der Eingriffsmittel 33, 34 verläuft, können Substratplatten durch Schieben in der Fügerichtung voneinander getrennt werden. Wenn die schlitzförmigen Ausnehmungen und Vorsprünge 27, 28 anders ausgerichtet sind, wird die gegenseitige Verschiebung der Substratplatten blockiert.

Die Achsensegmente 26 sind in den Lagerbohrungen 15 (siehe Figur 11) drehbar angeordnet. Vorzugsweise werden die Substratplatten mit den Achsensegmenten vorgefertigt. Bei der Vorfertigung werden die Achsensegmente bei Raumtemperatur in die Lagerbohrungen der Substratplatten eingepresst. Bei der Betriebstemperatur der Kryokonservierung, bei der die Elastizität der Materialien stark beschränkt ist, können die Achsensegmente 26 kaum mehr zerstörungsfrei aus den Lagerbohrungen 15 entfernt werden.

Auch beim Schiebestapel-Substrat 200 ist ein Basisteil 60 (Figur 12) vorgesehen, in dem entsprechend ein Achsensegment 26 angeordnet ist.

Die Substratplatten und Verankerungsachsen der Substrate 100, 200 werden vorzugsweise durch Spritzguss aus TPX, PE, PTFE o. dgl. hergestellt. Die Seitenlängen der Substratplatten sind bspw. im Bereich von 10 mm bis 20 cm oder darüber, wie z. B. 50 cm oder 80 cm gewählt. Die Dicke der Substratplatten beträgt bspw. 4 mm bis 5 cm oder mehr. Die Zahl der Probenreservoire 41, 42, 43 je Substratplatte ist von der Größe der Substratplatte und der Probenreservoire abhängig und beträgt bspw. 20 bis 200 für kleinere Formate. Bei größeren Formaten kann die Zahl erheblich höher sein und zum Beispiel 5000 bis 10000 betragen.

Die Größe und Form der Probenreservoire sind von den biologischen Proben (insbesondere biologisches Gewebe, Gewebeteile, biologische Zellen, Zellgruppen, Zellbestandteile, Zellorganellen oder biologisch relevante Makromoleküle) abhängig, die gelagert werden sollen.

Abweichend von den dargestellten Ausführungsbeispielen können je nach den Anforderungen bei Anwendung des erfindungsgemäßen Substrats Modifizierungen insbesondere in Bezug auf die Geometrie der einzelnen Teile vorgesehen sein. Beispielsweise ist es erfindungsgemäß nicht zwingend erforderlich, dass alle Substratplatten die gleiche Grundfläche besitzen. Vielmehr können Substratplatten mit verschiedenen Grundflächen im Stapel kombiniert werden. Beispielsweise kann die Grundfläche im Stapel nach oben hin kleiner werden. Des Weiteren ist nicht zwingend vorgesehen, dass die Verankerungsachsen und Lagerbohrungen jeweils einen runden Querschnitt besitzen. Es kann auch eine Verankerungsachse mit einem eckigen Querschnitt vorgesehen sein. Schließlich können bei der Drehstapel-Variante die Schlüsselflächen relativ zueinander verschieden ausgerichtet sein, so dass bei der Verdrehung der Verankerungsachse jeweils eine Substratplatte freigegeben und die übrigen blockiert werden.

Die in der Beschreibung, den Zeichnungen und den Ansprüchen offenbarten Merkmale der Erfindung können einzeln oder in Kombination für die Verwirklichung der Erfindung in ihren verschiedenen Ausgestaltungen von Bedeutung sein. Insbesondere können die für das Drehstapel-Substrat beschriebenen Merkmale beim Schiebestapel-Substrat (oder umgekehrt) vorgesehen sein.

## Patentansprüche

1. Substrat (100, 200) zur Aufnahme und Kryokonservierung einer Vielzahl von Proben, das umfasst:
- eine Vielzahl von Substratplatten (11, 12, 13), die als Stapel (10) übereinander angeordnet sind, und
- eine Verankerungsachse (20), mit der die Substratplatten (11, 12, 13) verbunden sind, wobei
- jede Substratplatte (11, 12, 13) eine Lagerbohrung (15) aufweist, durch welche die Verankerungsachse (20) hindurch tritt,
**dadurch gekennzeichnet, dass**
- die Substratplatten (11, 12, 13) jeweils eine Kompartimentanordnung (40) mit einer Vielzahl von Probenreservoiren (41, 42, 43) aufweisen, und
- mindestens eine Substratplatte (12) um die Verankerungsachse (20) aus dem Stapel (10) heraus verschwenkbar ist.

2. Substrat nach Anspruch 1, bei dem die Substratplatten (11, 12, 13) eine rechteckige Form besitzen und die Lagerbohrung (15) jeweils in einer Ecke der Substratplatten (11, 12, 13) vorgesehen ist.

3. Substrat nach Anspruch 1 oder 2, bei dem die Lagerbohrung (15) mindestens einer der Substratplatten (11, 12, 13) am Rand eine Einführungsöffnung (16) zur seitlichen Einführung der Verankerungsachse (20) in die Lagerbohrung (15) aufweist.

4. Substrat nach Anspruch 3, bei dem die Einführungsöffnung (16) eine Kragenöffnung (18) mit einer relativ zum Durchmesser der Lagerbohrung (15) geringeren Breite bildet und die Verankerungsachse (20) mindestens in Teilabschnitten ihrer Länge eine Dicke besitzt, die kleiner oder gleich der Breite der Kragenöffnung (18) ist.

5. Substrat nach mindestens einem der vorhergehenden Ansprüche, bei dem die Verankerungsachse (20) an ihrem oberen Ende eine Auskragung (22) aufweist.

6. Substrat nach mindestens einem der vorhergehenden Ansprüche, bei dem die Verankerungsachse (20) drehbar angeordnet ist.

7. Substrat nach mindestens einem der vorhergehenden Ansprüche, bei dem der Stapel (10) mindestens eine Datenspeichereinrichtung (50), eine Basisplatte (60) und/oder eine Abdeckplatte enthält.

8. Substrat nach Anspruch 7, bei dem die Basisplatte (60) einen Datenspeicher (65) enthält.

9. Substrat nach Anspruch 7 oder 8, bei dem die Verankerungsachse (20) mit einer untersten Substratplatte (11) oder der Basisplatte (60) lösbar verbunden ist.

10. Substrat nach mindestens einem der vorhergehenden Ansprüche, bei dem mindestens eine Substratplatte (11, 12, 13) im Stapel (10) senkrecht zur Verankerungsachse (20) verschiebbar ist.

11. Substrat nach mindestens einem der vorhergehenden Ansprüche, bei dem die Substratplatten (11, 12, 13) Eingriffsmittel (30) aufweisen, die eine laterale Verschiebung der Substratplatten (11, 12, 13) mindestens in einer Richtung senkrecht zu einer Stapelrichtung blockieren.

12. Substrat nach Anspruch 11, bei dem die Eingriffsmittel (30) mindestens eine Profilierung (31) auf einer Seitenfläche einer Substratplatte (11, 12, 13) umfassen, die mit einer komplementären Profilierung (32) auf einer Seitenfläche einer angrenzenden Substratplatte (11, 12, 13) zusammenwirkt.

13. Substrat nach Anspruch 11 oder 12, bei dem die Verankerungsachse (20) durch Verdrehung von einer abgesenkten Fixierposition, in der alle Substratplatten (11, 12, 13) im Stapel (10) gegenseitig fixiert sind, in eine Drehposition, in der die Substratplatten (11, 12, 13) entsprechend einem Spielraum in Stapelrichtung beweglich und um die Verankerungsachse verschwenkbar sind, und/oder in eine Freigabeposition überführt werden kann, in der mindestens eine Substratplatte (11, 12, 13) vom Stapel (10) getrennt werden kann.

14. Substrat nach Anspruch 11, bei dem die Eingriffsmittel (30) durch eine formschlüssige Schiebeführung gebildet werden.

15. Substrat nach mindestens einem der vorhergehenden Ansprüche, bei dem die Verankerungsachse (20) einen einstückigen Stab (21) umfasst, der sich über die Höhe des Stapels (10) erstreckt.

16. Substrat nach den Ansprüchen 15 und 4, bei dem der Stab (21) Schlüsselflächen (23) aufweist, die die Teilabschnitte mit der Dicke bilden, die kleiner oder gleich der Breite der Kragenöffnung (18) ist.

17. Substrat nach mindestens einem der vorhergehenden Ansprüche 1 bis 15, bei dem die Verankerungsachse (20) eine Vielzahl von Achsensegmenten (26) umfasst.

18. Substrat nach Anspruch 17, bei dem die Achsensegmente (26) jeweils einen zylinderförmigen Körper mit einer Höhe, die im wesentlichen der Dicke der Substratplatten (11, 12, 13) entspricht, und einem Durchmesser aufweisen, der dem Durchmesser der Lagerbohrungen (15) entspricht, wobei an Ober- und Unterseiten der Achsensegmente (26) zueinander komplementäre Ausnehmungen (27) und Vorsprünge (28) vorgesehen sind, die im zusammengesetzten Stapel (10) von Substratplatten (11, 12, 13) ineinander greifen.

19. Substrat nach mindestens einem der vorhergehenden Ansprüche, bei dem mindestens eine Substratplatte (11) einen Datenspeicher enthält.

20. Substrat nach mindestens einem der vorhergehenden Ansprüche, bei dem die Substratplatten aus Kunststoff bestehen.

21. Substrat nach mindestens einem der vorhergehenden Ansprüche, bei dem die Substratplatte (11, 12, 13) Seitenlängen besitzen, die kleiner als 10 cm sind.

22. Verfahren zur Kryokonservierung von Proben mit einem Substrat nach mindestens einem der vorhergehenden Ansprüche, mit den Schritten:
- Ablage der Proben auf den Substratplatten (11, 12, 13), und
- Einfrieren der Substratplatten (11, 12, 13) im Verbund des Stapels (10).

23. Verfahren nach Anspruch 22, bei dem der Stapel (10) der Substratplatten (11, 12, 13) vor der Ablage der Proben erfolgt.

24. Verfahren nach Anspruch 22, bei dem der Stapel (10) der Substratplatten (11, 12, 13) nach der Ablage der Proben erfolgt.

25. Verfahren nach einem der Ansprüche 22 bis 24, bei dem einzelne Substratplatten im gefrorenen oder aufgetauten Zustand aus dem Stapel (10) geschwenkt und/oder geschoben werden.

26. Verwendung eines Substrats nach mindestens einem der Ansprüche 1 bis 21 zur Lagerung flüssiger oder partikelförmiger Proben.

27. Verwendung eines Substrats nach mindestens einem der Ansprüche 1 bis 22 zur Tieftemperatur-Kryospeicherung biologischer Proben.

## Claims

1. Substrate (100, 200) for receiving and cryopreserving a multiplicity of samples, which comprises:
- a multiplicity of substrate plates (11, 12, 13) which are disposed one above the other as a stack (10), and
- an anchoring axle (20) with which the substrate plates (11, 12, 13) are connected,
- each substrate plate (11, 12, 13) having a bearing boring (15) through which the anchoring axle (20) penetrates,
**characterised in that**
- the substrate plates (11, 12, 13) have respectively a compartment arrangement (40) with a multiplicity of sample reservoirs (41, 42, 43), and
- at least one substrate plate (12) is pivotable about the anchoring axle (20) out of the stack (10).

2. Substrate according to claim 1, in which the substrate plates (11, 12, 13) have a rectangular shape and the bearing boring (15) is provided respectively in one corner of the substrate plates (11, 12, 13).

3. Substrate according to claim 1 or 2, in which the bearing boring (15) at least of one of the substrate plates (11, 12, 13) has at the edge an introduction opening (16) for lateral introduction of the anchoring axle (20) into the bearing boring (15).

4. Substrate according to claim 3, in which the introduction opening (16) forms a collar opening (18) with a smaller width relative to the diameter of the bearing boring (15), and the anchoring axle (20) has a thickness, at least in partial portions of the length thereof, which is smaller than or the same as the width of the collar opening (18).

5. Substrate according to at least one of the preceding claims in which the anchoring axle (20) has an overhang (22) at the upper end thereof.

6. Substrate according to at least one of the preceding claims, in which the anchoring axle (20) is disposed rotatably.

7. Substrate according to at least one of the preceding claims, in which the stack (10) contains at least one data logging device (50), a base plate (60) and/or a cover plate.

8. Substrate according to claim 7, in which the base plate (60) contains a data logger (65).

9. Substrate according to claim 7 or 8, in which the anchoring axle (20) is connected detachably to a lowermost substrate plate (11) or to the base plate (60).

10. Substrate according to at least one of the preceding claims, in which at least one substrate plate (11, 12, 13) can be displaced in the stack (10) perpendicularly to the anchoring axle (20).

11. Substrate according to at least one of the preceding claims, in which the substrate plates (11, 12, 13) have engagement means (30) which block lateral displacement of the substrate plates (11, 12, 13) at least in a direction perpendicular to a stacking direction.

12. Substrate according to claim 11, in which the engagement means (30) include at least one profile (31) on a lateral face of a substrate plate (11, 12, 13) which cooperates with a complementary profile (32) on a lateral face of an adjacent substrate plate (11, 12, 13).

13. Substrate according to claim 11 or 12, in which the anchoring axle (20) can be transferred, by rotation, from a lowered, fixing position, in which all the substrate plates (11, 12, 13) in the stack (10) are mutually fixed, into a rotating position, in which the substrate plates (11, 12, 13) can be moved corresponding to a clearance space in the stack direction and can be pivoted about the anchoring axle, and/or into a releasing position, in which at least one substrate plate (11, 12, 13) can be separated from the stack (10).

14. Substrate according to claim 11, in which the engagement means (30) are formed by a form-fitting sliding guide.

15. Substrate according to at least one of the preceding claims, in which the anchoring axle (20) includes a one-piece rod (21) which extends above the height of the stack (10).

16. Substrate according to claims 15 and 4, in which the rod (21) has key faces (23) which form the partial portions with a thickness which is smaller than or the same as the width of the collar opening (18).

17. Substrate according to at least one of the preceding claims 1 to 15, in which the anchoring axle (20) includes a multiplicity of axle segments (26).

18. Substrate according to claim 17, in which the axle segments (26) have respectively a cylindrical body with a height which corresponds substantially to the thickness of the substrate plates (11, 12, 13) and with a diameter which corresponds to the diameter of the bearing borings (15), on upper and lower sides of the axle segments (26) recesses (27) and projections (28) being provided, which are complementary to each other and engage one in the other in the assembled stack (10) of substrate plates (11, 12, 13).

19. Substrate according to at least one of the preceding claims, in which at least one substrate plate (11) contains a data logger.

20. Substrate according to at least one of the preceding claims, in which the substrate plates are made of plastic material.

21. Substrate according to at least one of the preceding claims, in which the substrate plates (11, 12, 13) have lateral lengths which are smaller than 10 cm.

22. Method for cryopreserving samples, having a substrate according to at least one of the preceding claims, with the steps:
- depositing the samples on the substrate plates (11, 12, 13), and
- freezing the substrate plates (11, 12, 13) in the assembly of the stack (10).

23. Method according to claim 22, in which the stack (10) of substrate plates (11, 12, 13) is produced before deposition of the samples.

24. Method according to claim 22, in which the stack (10) of substrate plates (11, 12, 13) is produced after deposition of the samples.

25. Method according to one of the claims 22 to 24, in which the individual substrate plates are pivoted and/or pushed out of the stack (10) in the frozen or thawed state.

26. Use of a substrate according to at least one of the claims 1 to 21 for storing liquid or particulate samples.

27. Use of a substrate according to at least one of the claims 1 to 22 for low temperature cryostorage of biological samples.

## Revendications

1. Support (100, 200) pour la réception et la cryoconservation d'une pluralité d'échantillons, comprenant :
- une pluralité de plateaux de support (11, 12, 13) superposés pour former une pile (10), et
- un axe de fixation (20) reliant les plateaux de support (11, 12, 13),
- chaque plateau de support (11, 12, 13) présentant un alésage de palier (15) traversé par l'axe de fixation (20),
**caractérisé en ce que**
- les plateaux de support (11, 12, 13) présentent chacun un compartimentage (40) avec une pluralité de réservoirs à pour échantillons (41, 42, 43), et
- **en ce qu'**au moins un plateau de support (12) est pivotant hors de la pile (10) autour de l'axe de fixation (20).

2. Support selon la revendication 1, où les plateaux de support (11, 12, 13) présentent une forme rectangulaire et où l'alésage de palier (15) est prévu dans un coin de chaque plateau de support (11, 12, 13).

3. Support selon la revendication 1 ou la revendication 2, où l'alésage de palier (15) d'au moins un des plateaux de support (11, 12, 13) présente sur son bord une ouverture d'insertion (16) pour l'insertion latérale de l'axe de fixation (20) dans l'alésage de palier (15).

4. Support selon la revendication 3, où l'ouverture d'insertion (16) forme une ouverture à col (18) de largeur inférieure par rapport au diamètre de l'alésage de palier (15), et où l'axe de fixation (20) présente au moins sur des parties de sa longueur une épaisseur inférieure ou égale à la largeur de l'ouverture à col (18).

5. Support selon l'une des revendications précédentes au moins, où l'axe de fixation (20) présente une partie en encorbellement (22) à son extrémité supérieure.

6. Support selon l'une des revendications précédentes au moins, où l'axe de fixation (20) est rotatif.

7. Support selon l'une des revendications précédentes au moins, où la pile (10) comprend au moins un dispositif de mémorisation de données (50), un plateau de base (60) et/ou un plateau de couverture.

8. Support selon la revendication 7, où le plateau de base (60) comprend une mémoire de données (65).

9. Support selon la revendication 7 ou la revendication 8, où l'axe de fixation (20) est raccordé de manière amovible à un plateau de support inférieur (11) ou bien au plateau de base (60).

10. Support selon l'une des revendications précédentes au moins, où au moins un plateau de support (11, 12, 13) est déplaçable dans la pile (10) perpendiculairement à l'axe de fixation (20).

11. Support selon l'une des revendications précédentes au moins, où les plateaux de support (11, 12, 13) comportent des moyens d'engrènement (30) bloquant un déplacement latéral des plateaux de support (11, 12, 13) perpendiculairement à une direction d'empilement, au moins dans une direction.

12. Support selon la revendication 11, où les moyens d'engrènement (30) comprennent au moins un profil (31) sur une surface latérale d'un plateau de support (11, 12, 13), coopérant avec un profil complémentaire (32) sur une surface latérale d'un plateau de support (11, 12, 13) contigu.

13. Support selon la revendication 11 ou la revendication 12, où l'axe de fixation (20) est déplaçable par rotation d'une position de fixation enfoncée, où tous les plateaux de support (11, 12, 13) sont mutuellement bloqués dans la pile (10), vers une position de rotation où les plateaux de support (11, 12, 13) sont mobiles suivant un jeu dans la direction d'empilement et pivotants autour de l'axe de fixation, et/ou est déplaçable vers une position de déblocage où au moins un plateau de support (11, 12, 13) peut être séparé de la pile (10).

14. Support selon la revendication 11, où les moyens d'engrènement (30) sont formés par une glissière à engagement positif.

15. Support selon l'une des revendications précédentes au moins, où l'axe de fixation (20) comprend une tige (21) d'un seul tenant, s'étendant sur toute la hauteur de la pile (10).

16. Support selon les revendications 15 et 4, où la tige (21) comprend des surfaces de blocage (23) formant les parties avec une épaisseur inférieure ou égale à la largeur de l'ouverture à col (18).

17. Support selon l'une des revendications 1 à 15 au moins, où l'axe de fixation (20) comprend une pluralité de segments d'axe (26).

18. Support selon la revendication 17, où les segments d'axe (26) comprennent chacun un corps cylindrique de hauteur correspondant sensiblement à l'épaisseur des plateaux de support (11, 12, 13), et de diamètre correspondant au diamètre des alésages de palier (15), des saillies (28) et des évidements (27) complémentaires étant respectivement prévus sur les côtés inférieur et supérieur des segments d'axe (26), s'engageant les unes dans les autres quand la pile (10) des plateaux de support (11, 12, 13) est assemblée.

19. Support selon l'une des revendications précédentes au moins, où au moins un plateau de support (11) comprend une mémoire de données.

20. Support selon l'une des revendications précédentes au moins, où les plateaux de support sont en matière plastique.

21. Support selon l'une des revendications précédentes au moins, où les plateaux de support (11, 12, 13) présentent des longueurs de côté inférieures à 10 cm.

22. Procédé de cryoconservation d'échantillons avec un support selon l'une des revendications précédentes au moins, comprenant les étapes suivantes :
- dépose des échantillons sur les plateaux de support (11, 12, 13), et
- congélation des plateaux de support (11, 12, 13) dans l'ensemble de pile (10).

23. Procédé selon la revendication 22, où la pile (10) des plateaux de support (11, 12, 13) est formée avant le dépôt des échantillons.

24. Procédé selon la revendication 22, où la pile (10) des plateaux de support (11, 12, 13) est formée après le dépôt des échantillons.

25. Procédé selon l'une des revendications 22 à 24, où les différents plateaux de support sont pivotés et/ou coulissés de la pile (10) dans un état de congélation ou de décongélation.

26. Utilisation d'un support selon l'une des revendications 1 à 21 au moins pour le stockage d'échantillons liquides ou particulaires.

27. Utilisation d'un support selon l'une des revendications 1 à 22 au moins pour le cryostockage d'échantillons biologiques à basse température.
